# EUROPEAN PATENT APPLICATION

(11) **EP 3 462 285 A1**
(43) Date of publication of application: **03.04.2019**
(21) Application number: 18197916.2
(22) Date of filing: 01.10.2018
(51) Int. Cl.: G06F 3/01

(54) **HAPTIC PITCH CONTROL**

(30) Priority: 02.10.2017 US 201762566875 P; 28.09.2018 US 201816146012
(71) Applicant: Immersion Corporation, San Jose, CA 95134 (US)
(72) Inventor: RANK, Stephen D., San Jose, CA California 95119 (US); RIHN, William S., San Jose, CA California 95126 (US); VENKATESAN, Srivatsav, Sunnyvale, CA California 94089 (US)
(74) Representative: Müller-Boré & Partner Patentanwälte PartG mbB

(57) **Abstract**

Haptic pitch control for producing haptic feedback by receiving capability information of a haptic output device, and determining a desired or target perceptual frequency or pitch. A haptic effect is then generated based on the capability information so that the haptic effect is rendered by the haptic output device at the desired or target perceptual frequency or pitch.

## Description

### PRIORITY APPLICATION

This application is a non-provisional of U.S. Provisional Patent Application No. 62/566,875, filed in the U.S. Patent and Trademark Office on October 2, 2017, which has been incorporated herein by reference in its entirety.

### FIELD OF INVENTION

Embodiments of the present invention are generally directed to pitch control of haptic feedback, and more particularly, to the modulation of the frequency for controlling the pitch of haptic feedback.

### BACKGROUND

Haptics relate to tactile and force feedback technology that takes advantage of an individual's sense of touch by applying haptic feedback effects (i.e., "haptic effects"), such as forces, vibrations, and motions, to the individual. Devices, such as mobile devices, touchscreen devices, and personal computers, can be configured to generate haptic effects. For example, when a user interacts with the device using, for example, a button, touchscreen, lever, joystick, wheel, or some other control element, the operating system of the device can send a command through control circuitry to produce the appropriate haptic effect.

Devices can be configured to coordinate the output of haptic effects with the output of other content, such as audio, so that the haptic effects are incorporated into the other content. For example, an audio effect developer can develop audio effects that can be output by the device, such as machine gun fire, explosions, or car crashes. Further, other types of content, such as video effects, can be developed and output by the device.

A haptic effect developer can author a haptic effect for the device, and the device can be configured to output the haptic effect along with the other content. However, such a process generally requires the individual judgment of the haptic effect developer to author a haptic effect that correctly compliments the audio effect, or other type of content. A poorly-authored haptic effect that does not compliment the audio effect, or other type of content, can produce an overall dissonant effect where the haptic effect does not "mesh," or is not timely rendered, with the audio effect or other content, providing a poor user experience.

### SUMMARY

Example embodiments provide for producing haptic feedback by receiving capability information of a haptic output device, and determining a desired or target perceptual frequency or pitch. A haptic effect is then generated based on the capability information so that the haptic effect is rendered by the haptic output device at the desired or target perceptual frequency or pitch.

Example embodiments overcome the difficult of controlling pitch by modulation of frequency independent of other parameters such as strength.

### BRIEF DESCRIPTION OF THE DRAWINGS

Example embodiments will be more clearly understood from the following detailed description taken in conjunction with the accompanying drawings. FIGS. 1-9 represent non-limiting, example embodiments as described herein.
FIG. 1 is a block diagram of a haptically-enabled system/device according to an example embodiment.
FIG. 2 is an user interface ("UI") for a haptic designer tool showing a strength curve in accordance with an example embodiment.
FIG. 3 is an Ul for a haptic designer tool showing a pitch curve added to a strength curve in accordance with an example embodiment.
FIG. 4 is a flow diagram of haptic buffer population in accordance with example embodiments.
FIG. 5 is a flow diagram of haptic data resampling in accordance with example embodiments.
FIGS. 6, 7 and 8 are diagrams of windows of haptic data in accordance with example embodiments.
FIG. 9 is a flow diagram of the filling of periodic pulsing in accordance with example embodiments.

### DETAILED DESCRIPTION

Embodiments are generally directed to pitch control of haptic feedback, and more particularly, to the modulation of the frequency for controlling the pitch of haptic feedback.

A haptically-enabled device is a device having embedded hardware (e.g., actuators or other output mechanisms) configured to apply the haptic effects. The embedded hardware is, generally, programmed to apply (or playback) a particular set of haptic effects. When a signal specifying which haptic effect(s) to play is received by the haptically-enabled device, the haptically-enabled device renders the specified haptic effect.

Example embodiments are directed an abstraction of frequency or pitch based on application program interfaces ("APIs") that are available for the actuator. If the designer knows that they wanted to go from a low frequency to a high frequency, or from a high frequency to a low frequency, that is generally the only information the designer needs to design the haptic effect as a designer tool takes care of the rest.

The term "pitch" as used herein refers to a perception of the frequency of vibration.

The terminology "perceptual frequency or pitch" as used herein refers to the frequency or pitch as perceived by a user that the haptic feedback is being rendered or reproduced for.

The terminology "haptic pitch control" as used herein refers to the ability to specify frequency independent of other parameters. Some devices have the ability to vibrate at any given frequency (within ranges). Some designer tools, for instance known embedded and integration software systems for designing and implementing haptic effects (*e.g*., Immersion TS5000), provide the ability to specify frequency independent of strength (*i.e*., the decoupling of frequency and strength control). Embodiments build on this concept by interpreting frequency in different ways depending on the capabilities of the device. Therefore, not only is the designer's intent considered when designing haptic effects - the capabilities of the device/haptic output devices are also considered.

For example, one haptic output device (*e.g*., a high definition ("HD") or standard definition ("SD") actuator) may be able to resonate at precise frequencies as specified by a designer or programmer by, for example, modulating a carrier frequency. Another device (*e.g*., a non-HD or SD actuator) may only be able to execute a series of pulses (*i.e*., a pulse train). The rate of pulsing gives an individual the perception of frequency.

A design tool may expose or identify a periodic pulsing separate from the perceived frequency of the haptic effect. An analogy would be musical notes. The rhythm of the notes corresponds to the pulses of the haptic effect whereas the pitch of the notes corresponds to the frequency, or pitch of the haptic effect. A designer tool that uses pulsing alone to drive the perception of frequency sacrifices the rhythmic pulsing of the haptic effect. One way to address this is to "fill" the rhythmic pulses with either higher frequency pitch data, or with a high frequency pulse train, to simulate pitch. An algorithm, combined with device characterization data, will determine whether to simulate the pitch using high-frequency pitch data, or a high-frequency pulse-train.

Some devices may only be able to achieve specific discrete frequencies. This may depend on hardware capabilities, firmware and/or software. The design tool in accordance to embodiments exposes the attainable frequencies to the designer. Alternatively, or in addition, an algorithm can determine the frequency at which to drive the effect, if the designer's chosen frequency is unattainable (*i.e*., "perceptual frequency" or pitch).

The effect pitch need not be constant. A curve (implemented as a UI element) may be used to allow the designer to modulate the pitch over time. Pitch may be represented in the Ul by this curve alone, by colorization of the effect, a sine wave (or other wave shape), fill within the effect's envelope, numerical data and/or some other means. Any such visual representation can be displayed on a computer screen where one axis (Y) corresponds to frequency and another axis (X) corresponds to time.

Pitch may also be modulated dynamically at runtime. For example, a designer may receive a lowest pitch and a highest pitch, associate the pitches with low/minimum and high/maximum values of a videogame variable (*e.g*., vehicle speed) and interpolate the effect pitch based on the game variable and how it is changed by user input.

In an example embodiment, for an actuator that cannot reproduce frequency (i.e., a non-HD actuator), example embodiments provide for receiving a pitch curve, interpreting the low point to be the lowest/minimum frequency the device can reproduce, and the high point to be the highest/maximum frequency the device can reproduce, and (as the amplitude is set) setting the frequency. At one point in time, a haptic effect can be rendered at 50% strength and 150 Hz, then a few minutes later, the haptic effect can be rendered at 51% strength and 160 Hz, and so on.

An example embodiment determines haptic device characteristics by determining how a haptic effect rendered by the haptic device is perceived by an individual (*i.e.,* what the individual feels or senses), rather than a stand-alone characterization such as using accelerometer data from an on-board accelerometer mounted on the haptic device. Therefore, the design intent can be maintained among different individuals by using different perceptual frequencies/pitches.

According to an example embodiment, the acceleration of the haptic device can be compared with the perceptual acceleration by, for instance, taking measurements on a gel mat that simulates a hand holding the haptic device. The comparison can add another parameter to the characterization of the haptic device.

According to example embodiments, other inputs (*e.g*., weather or environmental conditions) that effect the perception of frequency can also be used to generate additional parameters to be used in the characterization of the haptic device.

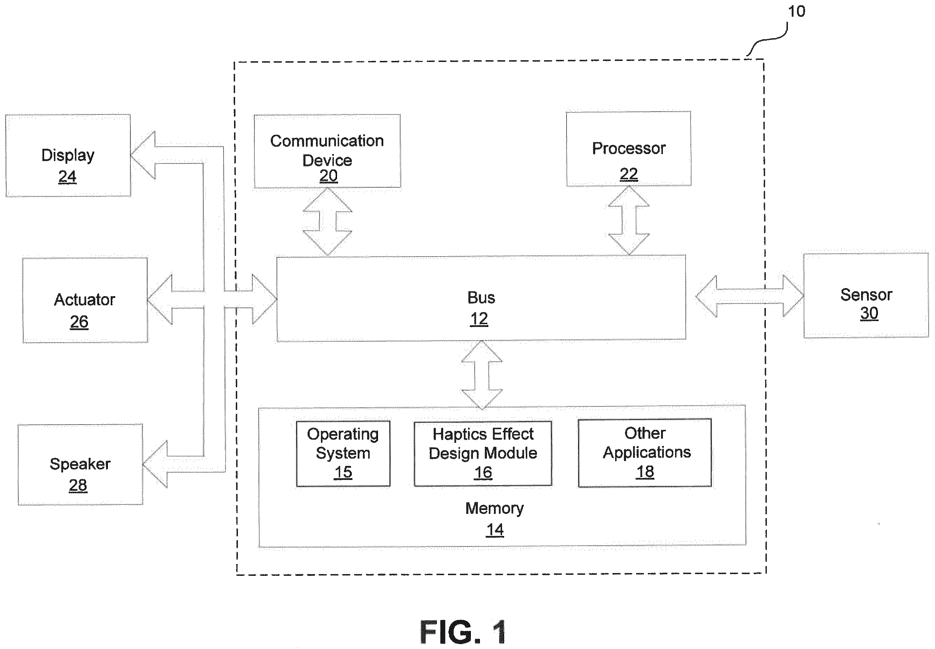

FIG. 1 is a block diagram of a haptically-enabled system/device according to an example embodiment.

Referring to FIG. 1, haptically-enabled system/device 10 can function as a haptic design tool for designing haptic effects, and/or as a device that generates or produces haptic effects.

In the various example embodiments, system 10 is part of a mobile device (e.g., a smartphone) or a non-mobile device (*e.g*., desktop computer, gaming system, virtual/augmented reality system, etc.), and system 10 provides haptic functionality for the device. In another example embodiment, system 10 is part of a device that is incorporated into an object in contact with an individual, and system 10 provides haptic functionality for such device. For example, in one embodiment, system 10 is included in a wearable device, and system 10 provides haptic functionality for the wearable device. Examples of wearable devices include wrist bands, headbands, eyeglasses, rings, leg bands, headsets, arrays integrated into clothing, or any other type of device that an individual may wear on a body or can be held by the individual. Some wearable devices can be "haptically enabled," meaning they include mechanisms to generate haptic effects. In another example embodiment, system 10 is separate from the device (*e.g*., a mobile device or a wearable device), and remotely provides haptic functionality for the device.

Although shown as a single system, the functionality of system 10 can be implemented as a distributed system. System 10 includes a bus 12 or other communication mechanism for communicating information, and a processor 22 coupled to bus 12 for processing information. Processor 22 may be any type of general purpose processor, or could be a processor specifically designed to provide haptic effects, such as an application-specific integrated circuit ("ASIC"). Processor 22 may be the same processor that operates the entire system 10, or may be a separate processor. Processor 22 can determine what haptic effects are to be rendered and the order in which the effects are rendered based on high level parameters. In general, the high level parameters that define a particular haptic effect include magnitude, frequency and duration. Low level parameters such as streaming motor commands could also be used to determine a particular haptic effect. A haptic effect may be considered "dynamic" if it includes some variation of these parameters when the haptic effect is generated or a variation of these parameters based on an individual's interaction.

Processor 22 outputs the control signals to a haptic drive circuit (not shown), which includes electronic components and circuitry used to supply actuator 26 with the required electrical current and voltage (*i.e*., "motor signals") to cause the desired or target haptic effects intended by the editor. In the example embodiment depicted in FIG. 1, actuator 26 is coupled to system 10. Alternatively, system 10 may include more than one actuator 26, and each actuator may include a separate drive circuit, all coupled to a common processor 22.

Processor 22 and the haptic drive circuit are configured to control the haptic drive signal of actuator 26 according to the various embodiments. A variety of parameters for the haptic drive signal may be modified. For example, the parameters can include start time, duration, loop count (*i.e.,* the number of times the haptic effect is repeated), clip length (*i.e.,* duration of a single instance of the haptic effect that is repeated), signal type (*i.e*., direction of the haptic effect if rendered on a bidirectional actuator, such as push or pull), strength type (*i.e*., strength curve relative to the signal type for bidirectional actuators), signal gap (*i.e*., for a pulsing effect, the period of haptic silence between pulses), signal width (*i.e*., for a pulsing effect, the duration of each pulse), gap first (*i.e*., for a pulsing effect, specifies whether the haptic effect should begin with a pulse or a gap), link gap to width (*i.e*., ratio between width and gap parameters), signal shape (*e.g*., sine, square, triangle, saw tooth, etc.), and other parameters. Using these parameters, the haptic effects of an application may be edited and rendered in real-time.

Processor 22 is configured to receive capability information of a haptic output device. The capability information can include specific frequencies that the haptic output device is able to resonate at and/or the ability of the haptic output device to execute or output a series of pulses. Processor 22 is further configured to determine a desired or target perceptual frequency or pitch, and generate a haptic effect based on the capability information so that the haptic effect is rendered by the haptic output device at the perceptual frequency or pitch.

According to an example embodiment, when the capability information includes an indication that the haptic output device is configured to resonate at specific frequencies, processor 22 is configured to generate the haptic effect by sampling values from a pitch curve that tracks the perceived frequency or pitch (i.e., frequency information) of the haptic effect over time. In order to control the pitch of a haptic effect, strength and/or other parameters of the haptic effect, in addition to frequency, can be modified.

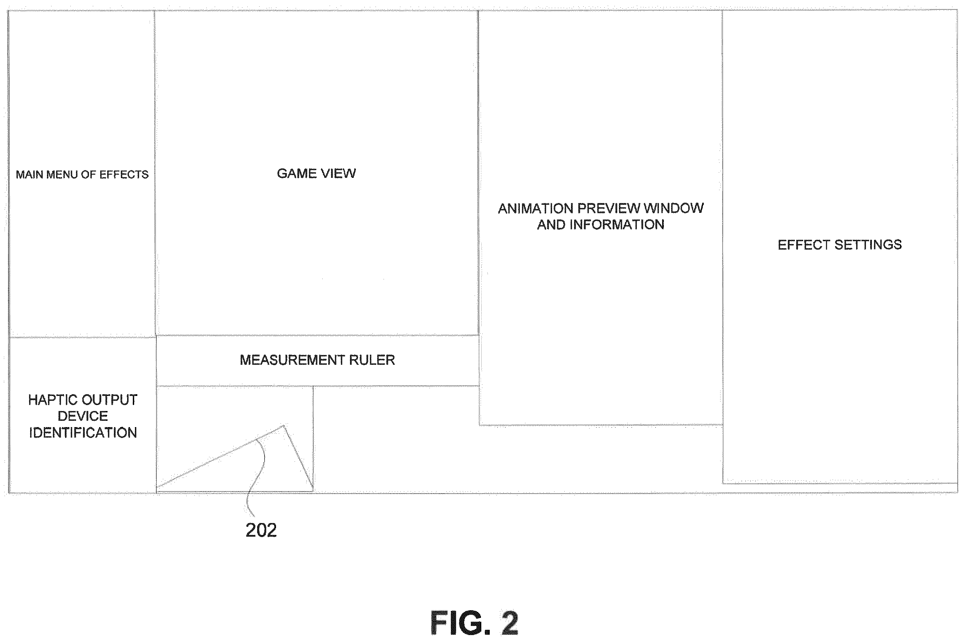

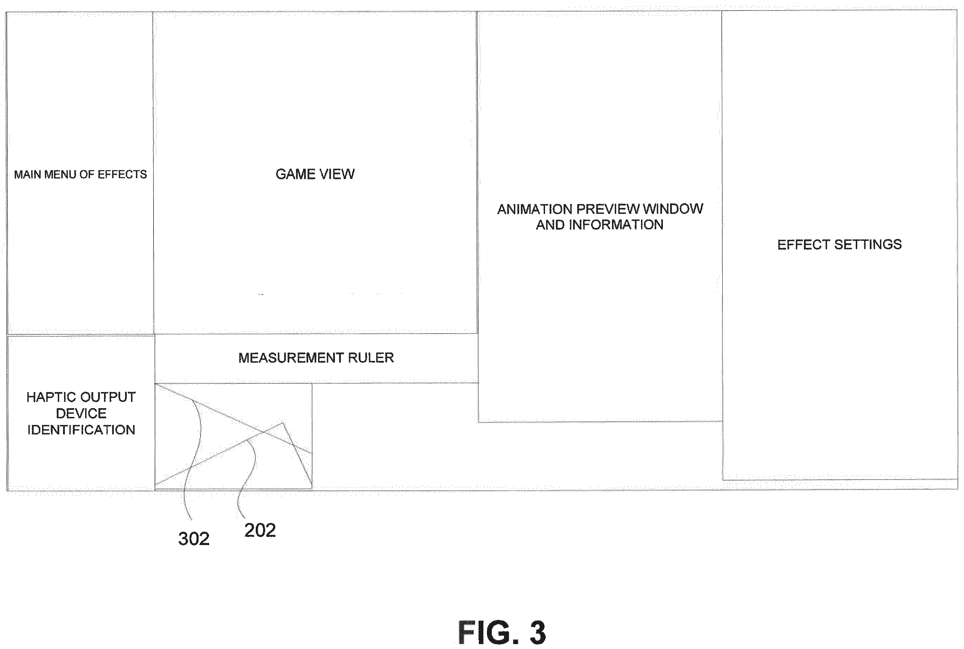

FIG. 2 is an UI for a haptic designer tool showing a strength curve in accordance with an example embodiment. FIG. 3 is an UI for a haptic designer tool showing a desired pitch curve added to a strength curve in accordance with an example embodiment.

Referring to FIGS. 2 and 3, a desired pitch curve 302 is added to a strength curve 202 in accordance with one embodiment. The pitch curve can be manually input in the designer tool by an editor. The editor can obtain pitch curve 302 from APIs available for the haptic output device - taking the capabilities of the haptic output device into consideration.

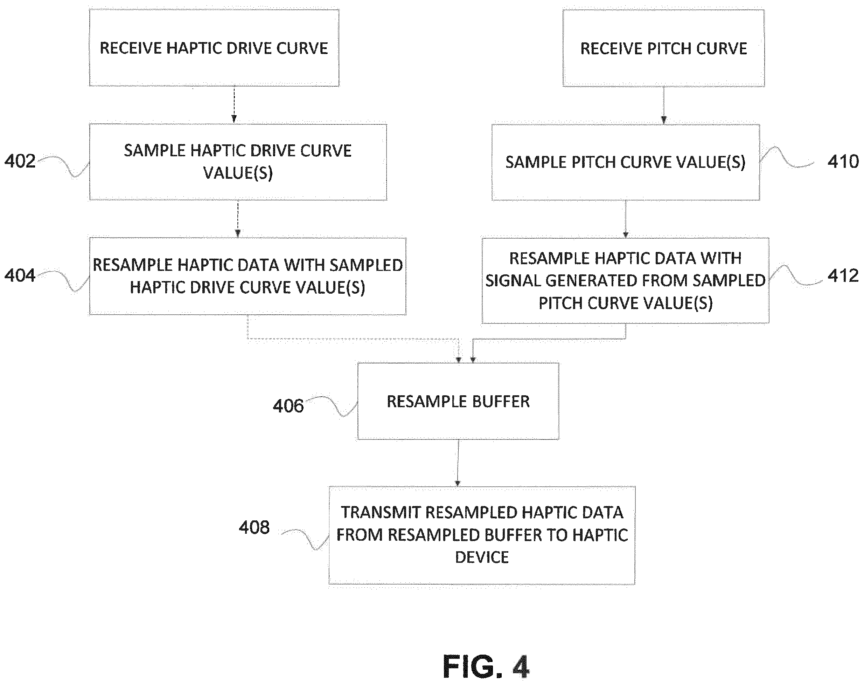

FIG. 4 is a flow diagram of haptic buffer population in accordance with example embodiments.

Pitch functionality is generally added to a haptic device by intelligently populating the haptic playback buffer to get the right frequency. For instance, as shown in FIG. 4, haptic drive values can be sampled from a haptic curve at 402, and then haptic data can be resampled with sampled haptic drive values at 404. The buffer is resampled with resampled haptic data at 406, which is transmitted to haptic device using a transmission control protocol (TCP) at 408.

However, resampling haptic data with the sampled haptic drive values does not allow for controlling pitch independent of other factors such as strength of the haptic effect.

According to an example embodiment, processor 22 is configured to generate the haptic effect by sampling values from a pitch curve at 410. Select values from the pitch curve are translated, by processor 22, from the time-domain into the frequency domain using a Fast Fourier transform ("FFT"). The FFT transform deconstructs time domain signals of the select values into frequency domain signals for analysis of different frequencies in the pitch. A frequency domain signal having the desired or target frequency can be selected. A window function (see functions listed in Table 1) may be applied to multiple frequency domain signals to obtain a single frequency domain signal having the desired or target frequency. This technique of transforming multiple signals into one signal is known in the art, and therefore specific details of the transformation are not provided herein. Processor 22 translates the selected frequency domain signal back to a time domain signal.

**TABLE 1**

| **Signal Content** | **Window Function** |
|---|---|
| Sine wave or combination of sine waves | Hann |
| Sine wave (amplitude accuracy is important) | Flat Top |
| Narrowband random signal (vibration data) | Hann |
| Broadband random (white noise) | Uniform |
| Closely spaced sine waves | Uniform, Hamming |
| Excitation signals (hammer blow) | Force |
| Response signals | Exponential |
| Unknown content | Hann |
| Sine wave or combination of sine waves | Hann |
| Sine wave (amplitude accuracy is important) | Flat Top |
| Narrowband random signal (vibration data) | Hann |
| Broadband random (white noise) | Uniform |
| Two tones with frequencies close but amplitudes very different | Kaiser-Bessel |
| Two tones with frequencies close and almost equal amplitudes | Uniform |
| Accurate signal tone amplitude measurements | Flat Top |

The haptic data in an original haptic drive signal is resampled with the time domain signal generated from the sampled pitch curve values at 412 to generate a modified haptic drive signal. The buffer is resampled with modified haptic drive signal at 406, which is transmitted to haptic device at 408. The modified haptic drive signal is used to render the haptic effect at the perceptual frequency or pitch.

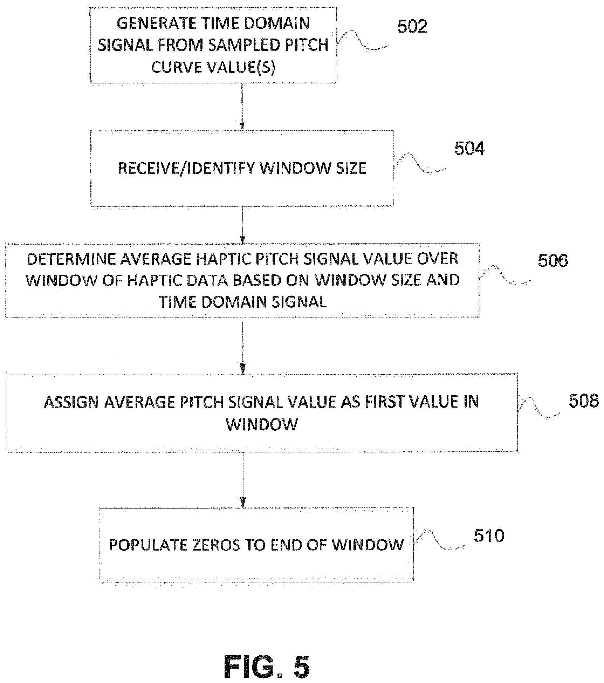

FIG. 5 is a flow diagram of haptic data resampling in accordance with example embodiments.

Referring to FIG. 5, processor 22 is configured to resample the haptic data by reading or sampling the pitch value(s) from pitch curve, and generating a time domain signal from the sampled pitch curve values at 502..

Processor 22 is configured to receive or identify a window size at 504. Sliding windowing can be used for controlling transmitted haptic data packets in a haptic drive signal between a transmitter such as processor 22 and a receiver such as haptic output device 26. "Window announcements" can be sent by haptic output device 26 to processor 22 in order to acknowledge receipt of haptic data, and to inform processor 22 of the buffer capacity of haptic output device 26. A window announcement identifies the window size, which is the number of haptic data packets or samples that can be transmitted. For example, if a window size is zero, then processor 22 must wait for authorization from haptic output device 26 before sending any further haptic data to haptic output device 26. The window size varies based on the rate at which haptic output device 26 can process the haptic data packets and on the buffer capacity of haptic output device 26. If the application program in haptic output device 26 processes the haptic data packets at a slower rate than processor 22 is transmitting the haptic data packets, haptic output device 26 will send a signal to processor 22 to decrease the number of haptic data packets in the window size in the next transmission, or to temporarily stop transmission in order to free the buffer. If the application program in haptic output device 26 processes the haptic data packets at a faster rate than processor 22 is transmitting the haptic data packets, haptic output device 26 will send a signal to processor 22 to increase the number of haptic data packets in the window size in the next transmission.

At 506, processor 22 is configured to determine or calculate an average haptic pitch signal value over a window of haptic data based on the window size and the time domain signal generated from the sampled pitch values. Then, processor 22 assigns the average haptic pitch signal value as a first drive value in window at 508, and populates the window with at least one zero to generate modified haptic data at 510. The term "window" as used herein refers to a subset of discrete values representing haptic data in a packet of haptic data.

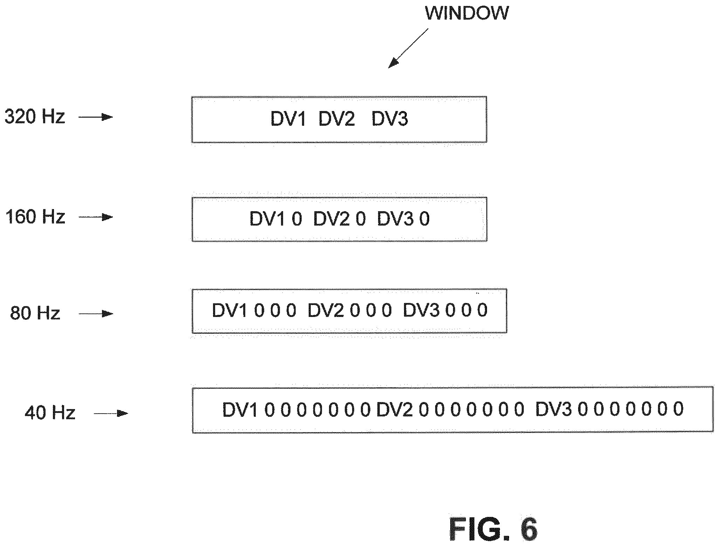

FIGS. 6, 7 and 8 are diagrams of windows of haptic data in accordance with example embodiments.

As shown in FIG. 6, assuming that the default playback frequency is 320 Hz where every value in the haptic buffer is the designer's intent haptic value, to achieve a frequency of 160 Hz the first drive value (DV1) is assigned, and then the first drive value is padded with a zero. The drive values (DV2 and DV3) are alternately populated in the window of haptic data with each drive value being padded with a zero.

To achieve an even smaller frequency (e.g., a frequency of 80 Hz), processor 22 assigns the average haptic drive value as the first or subsequent drive value in the window of haptic data, and populates the window of haptic data with two or more zeros (*e.g*., three zeros) after the first or subsequent drive value.

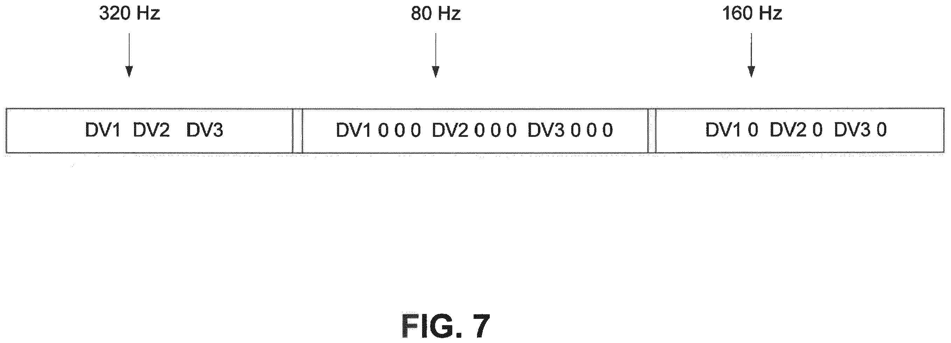

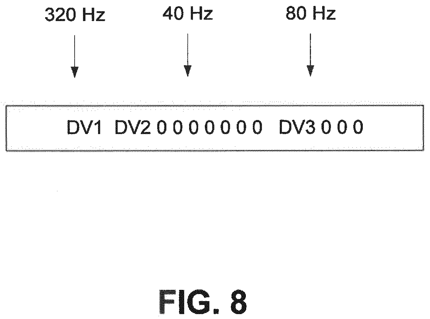

As shown in FIG. 7, each window of haptic data can be populated to correspond to a single frequency. Alternatively, as shown in FIG. 8, a single window of haptic data can be populated to correspond to haptic data with different frequencies.

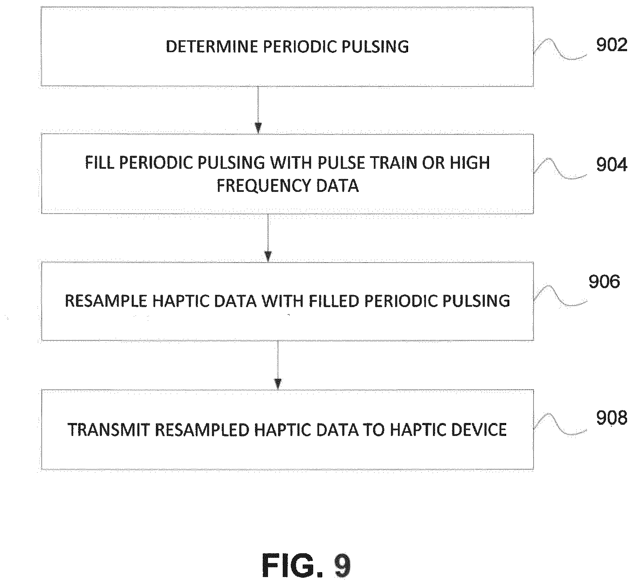

FIG. 9 is a flow diagram of the filling of periodic pulsing in accordance with example embodiments.

Referring to FIG. 9, according to an example embodiment, when the capability information includes information that the haptic output device is configured to output a series of pulses, processor 22 is configured to generate the haptic effect by identifying a periodic pulsing of haptic effect at 902, and to fill the periodic pulsing with a pulse train or frequency data to render the haptic effect at perceptual frequency or pitch at 904.

The pulse train or frequency data can have a higher frequency than the periodic pulsing. In other example embodiments, the pulse train or frequency data can have a lower frequency than the periodic pulsing. The pulse train is a repetitive series of pulses separated in time by a fixed and often constant interval. The pulse train is represented by a non-sinusoidal waveform that includes square waves and periodic, asymmetrical (or rectangular) waves.

At 906, the haptic data in an original haptic drive signal is resampled by processor 22 with the filled periodic pulsing to generate a modified haptic drive signal. The modified haptic drive signal is transmitted to haptic device at 908. The modified haptic drive signal is used to render the haptic effect at the perceptual frequency or pitch.

Referring back to FIG. 1, non-transitory memory 14 may include a variety of computer-readable media that may be accessed by processor 22. In the various embodiments, memory 14 and other memory devices described herein may include a volatile and nonvolatile medium, removable and non-removable medium. For example, memory 14 may include any combination of random access memory ("RAM"), dynamic RAM ("DRAM"), static RAM ("SRAM"), read only memory ("ROM"), flash memory, cache memory, and/or any other type of non-transitory computer-readable medium. Memory 14 stores haptic data that is encoded in a haptic signal used to drive haptic device(s). Memory 14 stores instructions executed by processor 22. Among the instructions, memory 14 includes instructions for haptic effect design module 16. Haptic effect design module 16 includes instructions that, when executed by processor 22, enables a haptic editing application and further renders the haptic effects using actuators 26, as disclosed in more detail below. Memory 14 may also be located internal to processor 22, or any combination of internal and external memory.

Non-transitory memory 14 causes processor 22 to perform the instructions including receiving capability information of the haptic output device, determining a desired or target perceptual frequency or pitch, and generating a haptic effect based on the capability information so that the haptic effect is rendered by the haptic output device at the perceptual frequency or pitch, as described in detail above.

Actuator 26 may be any type of actuator or haptic output device that can generate a haptic effect. In general, an actuator is an example of a haptic output device, where a haptic output device is a device configured to output haptic effects, such as vibrotactile haptic effects, electrostatic friction haptic effects, temperature variation, and/or deformation haptic effects, in response to a drive signal. Although the term "actuator" may be used throughout the detailed description, the example embodiments may be readily applied to a variety of haptic output devices. Actuator 26 may be, for example, an electric motor, an electro-magnetic actuator, a voice coil, a shape memory alloy, an electro-active polymer, a solenoid, an eccentric rotating mass motor ("ERM"), a harmonic ERM motor ("HERM"), a linear resonance actuator ("LRA"), a solenoid resonance actuator ("SRA"), a piezoelectric actuator, a macro fiber composite ("MFC") actuator, a high bandwidth actuator, an electroactive polymer ("EAP") actuator, an electrostatic friction display, an ultrasonic vibration generator, or the like. In some instances, the actuator itself may include a haptic drive circuit.

Additionally, or alternatively, system 10 may include or be coupled to other types of haptic output devices (not shown) that may be non-mechanical or non-vibratory devices such as devices that use electrostatic friction ("ESF"), ultrasonic surface friction ("USF"), devices that induce acoustic radiation pressure with an ultrasonic haptic transducer, devices that use a haptic substrate and a flexible or deformable surface or shape changing devices and that may be attached to an individual's body, devices that provide projected haptic output such as a puff of air using an air jet, etc.

In general, an actuator may be characterized as a SD actuator that generates vibratory haptic effects at a single frequency. Examples of an SD actuator include ERM and LRA. In contrast to an SD actuator, an HD actuator or high fidelity actuator such as a piezoelectric actuator or an EAP actuator is capable of generating high bandwidth/definition haptic effects at multiple frequencies. HD actuators are characterized by their ability to produce wide bandwidth tactile effects with variable amplitude and with a fast response to transient drive signals. Although embodiments were prompted by higher quality actuators, such as bidirectional actuators that provide push/pull effects (e.g., on a game controller trigger element powered by TouchSense® Force technology by Immersion Corporation) or frequency modifiable actuators, the embodiments are not limited thereto and may be readily applied to any haptic output device.

In embodiments that transmit and/or receive data from remote sources, system 10 further includes a communication device 20, such as a network interface card, to provide mobile wireless network communication, such as infrared, radio, Wi-Fi, cellular network communication, etc. In other embodiments, communication device 20 provides a wired network connection, such as an Ethernet connection, a modem, etc.

Processor 22 is further coupled via bus 12 to a display 24, such as a Liquid Crystal Display ("LCD"), for displaying a graphical representation or user interface to a user. Display 24 may be a touch-sensitive input device, such as a touch screen, configured to send and receive signals from processor 22, and may be a multi-touch touch screen.

In the various embodiments, system 10 includes or is coupled to a speaker 28. Processor 22 may transmit an audio signal to speaker 28, which in turn outputs audio effects. Speaker 28 may be, for example, a dynamic loudspeaker, an electrodynamic loudspeaker, a piezoelectric loudspeaker, a magnetostrictive loudspeaker, an electrostatic loudspeaker, a ribbon and planar magnetic loudspeaker, a bending wave loudspeaker, a flat panel loudspeaker, a heil air motion transducer, a plasma arc speaker, a digital loudspeaker, etc. In alternate embodiments, system 10 may include one or more additional speakers, in addition to speaker 28 (not illustrated in FIG. 1). System 10 may not include speaker 28, and a separate device from system 10 may include a speaker that outputs the audio effects, and system 10 sends audio signals to that device through communication device 20.

System 10 may further include or be coupled to a sensor 30. Sensor 30 may be configured to detect a form of energy, or other physical property, such as, but not limited to, sound, movement, acceleration, biological signals, distance, flow, force/pressure/strain/bend, humidity, linear position, orientation/inclination, radio frequency, rotary position, rotary velocity, manipulation of a switch, temperature, vibration, visible light intensity, etc. Sensor 30 may further be configured to convert the detected energy, or other physical property, into an electrical signal, or any signal that represents virtual sensor information. Sensor 30 may be any device, such as, but not limited to, an accelerometer, a galvanic skin response sensor, a capacitive sensor, a hall effect sensor, an infrared sensor, an ultrasonic sensor, a pressure sensor, a fiber optic sensor, a flexion sensor (or bend sensor), a force-sensitive resistor, a load cell, a LuSense CPS2 155, a miniature pressure transducer, a piezo sensor, a strain gauge, a hygrometer, a linear position touch sensor, a linear potentiometer (or slider), a linear variable differential transformer, a compass, an inclinometer, a magnetic tag (or a radio frequency identification tag), a rotary encoder, a rotary potentiometer, a gyroscope, an on-off switch, a temperature sensor (such as a thermometer, thermocouple, resistance temperature detector, thermistor, temperature-transducing integrated circuit, etc.), a microphone, a photometer, an altimeter, a biological monitor, a camera, a light-dependent resistor, etc., or any device that outputs an electrocardiogram, an electroencephalogram, an electromyograph, an electrooculogram, an electro-palatograph, or any other electrophysiological output.

In alternate embodiments, system 10 may include or be coupled to one or more additional sensors (not illustrated in FIG. 1), in addition to sensor 30. In some of these embodiments, sensor 30 and the one or more additional sensors may be part of a sensor array, or some other type of collection/arrangement of sensors. Further, in other alternate embodiments, system 10 may not include sensor 30, and a separate device from system 10 includes a sensor that detects a form of energy, or other physical property, and converts the detected energy, or other physical property, into an electrical signal, or other type of signal that represents virtual sensor information. The device may then send the converted signal to system 10 through communication device 20.

Embodiments provide for the modulation of frequency to control the pitch of haptic feedback based on capabilities of the haptic output device and independent of other parameters of the haptic effect such as strength.

Several embodiments have been specifically illustrated and/or described. However, it will be appreciated that modifications and variations of the disclosed embodiments are covered by the above teachings and within the purview of the appended claims without departing from the spirit and intended scope of the invention.

## Claims

1. A method of producing haptic feedback, comprising:
receiving capability information of a haptic output device;
determining a target perceptual frequency or pitch; and
generating a haptic effect based on the capability information so that the haptic effect is rendered by the haptic output device at the target perceptual frequency or pitch.

2. The method of claim 1, wherein
the capability information includes information that the haptic output device is configured to output a series of pulses, and
the generating of the haptic effect includes
identifying a periodic pulsing of the haptic effect, and
filling the periodic pulsing with a pulse train or frequency data to render the haptic effect at the target perceptual frequency or pitch, the pulse train or frequency data having a higher frequency than the periodic pulsing.

3. The method of any one of the preceding claims, wherein
the capability information includes information that the haptic output device is configured to resonate at specific frequencies, and
the generating of the haptic effect includes
sampling at least one value from a pitch curve, the pitch curve corresponding to frequency of the haptic effect over time, and
resampling haptic data in an original haptic drive signal based on the at least one value to generate a modified haptic drive signal, the modified haptic drive signal being used to render the haptic effect at the target perceptual frequency or pitch.
wherein the resampling of the haptic data preferably includes:
determining a window size of the haptic output device;
calculating an average haptic pitch value over a window of the haptic data based on the window size and the at least one value;
assigning the average haptic pitch value as a first drive value in the window; and
populating the window with at least one zero to generate modified haptic data.

4. The method of claim 3, further comprising:
generating the modified haptic drive signal using the modified haptic data.

5. The method of claim 3 or 4, wherein the window is populated with one zero after the first drive value, and
the method further comprises
assigning the average haptic pitch value as subsequent drive value in the window of the haptic data;
populating the window of the haptic data with two or more zeros after the subsequent drive value to generate remodified haptic data; and
generating the modified haptic drive signal using the remodified haptic data.

6. The method of any one of the preceding claims, wherein
the determining of the target perceptual frequency or pitch includes determining a target perceptual minimum frequency or pitch and a target perceptual maximum frequency or pitch, and
the method further comprises:
associating the target perceptual minimum frequency or pitch with a minimum value of a first variable, and the target perceptual maximum frequency or pitch with a maximum value of the first variable; and
modulating the target perceptual frequency or pitch based on changes in the first variable, wherein the changes in the first variable are in response to user input.

7. A haptically-enabled system, comprising:
a memory storing haptic data; and
a processor coupled to the memory, the processor being configured to
receive capability information of a haptic output device,
determine a target perceptual frequency or pitch, and
generate a haptic effect based on the capability information so that the haptic effect is rendered by the haptic output device at the target perceptual frequency or pitch.

8. The haptically-enabled system of claim 7, wherein
the capability information includes information that the haptic output device is configured to output a series of pulses, and
to generate the haptic effect includes
to identify a periodic pulsing of the haptic effect, and
to fill the periodic pulsing with a pulse train or frequency data to render the haptic effect at the target perceptual frequency or pitch, the pulse train or frequency data having a higher frequency than the periodic pulsing.

9. The haptically-enabled system of claim 7 or 8, wherein
the capability information includes information that the haptic output device is configured to resonate at specific frequencies, and
to generate the haptic effect includes
to sample at least one value from a pitch curve, the pitch curve corresponding to frequency of the haptic effect over time, and
to resample haptic data in an original haptic drive signal based on the at least one value to generate a modified haptic drive signal, the modified haptic drive signal being used to render the haptic effect at the target perceptual frequency or pitch;
wherein to resample the haptic data preferably includes:
to determine a window size of the haptic output device;
to calculate an average haptic pitch value over a window of the haptic data based on the window size and the at least one value;
to assign the average haptic pitch value as a first drive value in the window; and
to populate the window with at least one zero to generate modified haptic data.

10. The haptically-enabled system of claim 9, wherein the processor is further configured to generate the modified haptic drive signal using the modified haptic data; and/or
wherein the window is populated with one zero after the first drive value, and
to resample the haptic data further includes:
to assign the average haptic pitch value as subsequent drive value in the window of the haptic data;
to populate the window of the haptic data with two or more zeros after the subsequent drive value to generate re-modified haptic data; and
to generate the modified haptic drive signal using the remodified haptic data.

11. The haptically-enabled system of any one of the preceding claims 7 to 10, wherein
to determine the target perceptual frequency or pitch includes to determine a target perceptual minimum frequency or pitch and a target perceptual maximum frequency or pitch, and
wherein the processor is further configured to
associate the target perceptual minimum frequency or pitch with a minimum value of a first variable, and the target perceptual maximum frequency or pitch with a maximum value of the first variable; and
modulate the target perceptual frequency or pitch based on changes in the first variable, wherein the changes in the first variable are in response to user input.

12. A non-transitory computer-readable medium having instructions stored thereon that, when executed by a processor, cause the processor to perform the instructions comprising:
receiving capability information of a haptic output device;
determining a target perceptual frequency or pitch; and
generating a haptic effect based on the capability information so that the haptic effect is rendered by the haptic output device at the target perceptual frequency or pitch.

13. The non-transitory computer-readable medium of claim 12, wherein:
the capability information includes information that the haptic output device is configured to output a series of pulses, and
the generating of the haptic effect includes
identifying a periodic pulsing of the haptic effect, and
filling the periodic pulsing with a pulse train or frequency data to render the haptic effect at the target perceptual frequency or pitch, the pulse train or frequency data having a higher frequency than the periodic pulsing; and/or
wherein:
the capability information includes information that the haptic output device is configured to resonate at specific frequencies, and
the generating of the haptic effect includes
sampling at least one value from a pitch curve, the pitch curve corresponding to frequency of the haptic effect over time, and
resampling haptic data in an original haptic drive signal based on the at least one value to generate a modified haptic drive signal, the modified haptic drive signal being used to render the haptic effect at the target perceptual frequency or pitch.

14. The non-transitory computer-readable medium of claim 13, wherein the resampling of the haptic data includes:
determining a window size of the haptic output device;
calculating an average haptic pitch value over a window of the haptic data based on the window size and the at least one value;
assigning the average haptic pitch value as a first drive value in the window; and
populating the window with at least one zero to generate modified haptic data; and/or
wherein the instructions further comprise:
generating the modified haptic drive signal using the modified haptic data.

15. The non-transitory computer-readable medium of any one of the preceding claims 12 to 14, wherein the window is populated with one zero after the first drive value, and
the instructions further comprise
assigning the average haptic pitch value as subsequent drive value in the window;
populating the window with two or more zeros after the subsequent drive value to generate re-modified haptic data; and
generating the modified haptic drive signal using the remodified haptic data.
